# EUROPÄISCHE PATENTSCHRIFT

(11) **EP 0 756 995 B1**
(45) Veröffentlichungstag und Bekanntmachung des Hinweises auf die Patenterteilung: **05.01.2000**
(21) Anmeldenummer: 96111654.8
(22) Anmeldetag: 19.07.1996
(51) Int. Cl.: B65B 35/20, B65B 19/22, B65G 47/84, B65G 29/00

(54) **Vorrichtung zum Überführen von Packungsblöcken aus stabförmigen Artikeln der tabakverarbeitenden Industrie**
Device for transferring blocks of rod-like articles in the tobacco industry
Dispositif pour transférer des groupes d'articles en forme de tige dans l'industrie du tabac

(30) Priorität: 01.08.1995 DE 19528200
(43) Veröffentlichungstag der Anmeldung: 05.02.1997
(73) Patentinhaber: TOPACK Verpackungstechnik GmbH, 21493 Schwarzenbek (DE)
(72) Erfinder: Vetter, Jürgen, 21029 Hamburg (DE)
(74) Vertreter: Herrmann, Günther

(56) Entgegenhaltungen:
- FR-A- 2 218 247
- US-A- 2 180 163
- US-A- 4 134 502
- US-A- 4 144 695
- US-A- 4 388 989

## Beschreibung

Die Erfindung betrifft eine Vorrichtung zum Überführen von wenigstens teilweise umhüllten Packungsblöcken aus stabförmigen Artikeln der tabakverarbeitenden Industrie mittels einer Stößeleinrichtung von einem ersten Niveau einer stationären Übergabeposition auf ein zweites Niveau in Aufnahmezellen eines umlaufenden Fördermittels, denen im Wechsel mit der Stößeleinrichtung die Packungsblöcke in den Aufnahmezellen haltende Sperrmittel zugeordnet sind.

Im Zuge der Verpackung von blockförmig zusammengestellten Tabakartikeln, insbesondere Zigaretten, durchlaufen derartige mit unterschiedlichen Verpackungskomponenten vereinigte und umhüllte Zigarettenblöcke während eines Verpakkungszyklus taktweise zahlreiche Förderabschnitte mit den unterschiedlichsten zusammenwirkenden Fördermitteln, auf denen zugleich Verpackungsoperationen vorgenommen werden können.
An den sich auf diese Weise ergebenden Schnittstellen bzw. Übergabestellen zwischen zwei Fördermitteln kann es dabei zu leistungsbegrenzenden Engpässen wegen zu langer Stillstandszeiten zwischen zwei Fördertakten kommen.

Gemäß der FR 2 218 247 A ist eine Einrichtung bekannt, auf der die vorstehend beschriebenen Verpackungsoperationen vorgenommen und die zu vereinigenden Verpackungskomponenten gefördert und überführt werden und die auf gattungsgemäße Weise an einer stationären Übergabeposition ein mit Aufnahmezellen versehenes umlaufendes Fördermittel in Form einer in einer vertikalen Ebene um eine horizontale Achse drehenden Überführungstrommel umfaßt, in deren Aufnahmetaschen Zigarettenblöcke durch Sperrmittel in Form seitlicher Klemmelemente gehalten werden.

Der Erfindung liegt die Aufgabe zugrunde, insbesondere Förder- bzw. Überführungsabschnitte mit Fördermitteln der eingangs bezeichneten Art leistungsfähiger und flexibler zu gestalten und dabei gleichzeitig eine schonendere Handhabung der Packungsblöcke zu erreichen.

Diese Aufgabe wird erfindungsgemäß dadurch gelöst, daß das auf dem zweiten höheren Niveau angeordnete, als um eine vertikale Achse rotierender horizontaler Drehteller ausgebildete Fördermittel unterhalb der Aufnahmezellen mit die Pakkungsblöcke im Wechsel mit der Stößeleinrichtung stützenden Halteschiebern ausgestattet ist, welche jeweils unter einer Aufnahmezelle im Drehteller vorschiebbar sind, wobei die Übergabeposition eine einen Hubstößel der Stößeleinrichtung aufnehmende Durchbrechung einer Zuführungsplattform für die Packungsblöcke umfaßt.
Um auch bei hohen Überführungsgeschwindigkeiten eine sichere Handhabung der Packungsblöcke zu gewährleisten, besteht die Stößeleinrichtung zweckmäßigerweise aus die Packungsblöcke gefesselt überführenden Ober- und Unterstößeln.

Zweckmäßigerweise ist der Zuführungsplattform ein die Packungsblöcke entlang eines im wesentlichen horizontalen Vorschubweges beaufschlagender Schwenkstößel zugeordnet.
Eine ungehinderte Zusammenwirkung von Hubstößel und Halteschieber ist nach einem weiteren Vorschlag dadurch gewährleistet, daß der Hubstößel und der Halteschieber derart ausgebildet bzw. angeordnet und relativ zueinander bewegbar sind, daß sie jeweils benachbarte Flächenabschnitte der Packungsblöcke beaufschlagen, wobei nach einem weiteren Vorschlag der Hubstößel einen größeren Flächenabschnitt und der Halteschieber einen kleineren Flächenabschnitt der Packungsblöcke beaufschlagt.
Eine einwandfreie Überführung der Packungsblöcke wird weiterhin dadurch unterstützt, daß zwischen der stationären Übergabeposition und den Aufnahmezellen des Drehtellers ein stationäres Mundstück angeordnet ist.

Zweckmäßigerweise sind die Halteschieber durch eine unabhängig vom Antrieb des Drehtellers hin- und herschwenkend antreibbare Steuerkurve vor- und zurückbewegbar angeordnet.

Der mit der Erfindung erzielte Vorteil besteht darin, daß sich die Fördertakte des abfördernden Fördermittels und des zufördernden Fördermittels überschneiden können, wodurch Zeit gewonnen bzw. die Stillstandszeit verringert und damit die Förder- bzw. Durchsatzleitung erhöht wird, wobei zugleich eine schonende Handhabung der Packungsblöcke gewährleistet ist und durch eine mögliche Aussonderung fehlerhafter Packungsblöcke an einer entsprechenden Station entlang der Überführungsstrecke eine größere Flexibilität gewonnen wird.

Ein Ausführungsbeispiel der Erfindung ist in der Zeichnung dargestellt und wird nachstehend näher erläutert.

Hierbei zeigen:
- Figur 1: ein in eine nicht weiter dargstellte Zigarettenpackmaschine integrierter Drehteller zum Transportieren und Verpacken von Zigarettenpackungsblöcken in der Draufsicht,
- Figur 2: einen Längsschnitt durch den Drehteller gemäß Figur 1 mit zugeordneter Übergabestation für Packungsblöcke,
- Figuren 3 bis 6: Teilschnitte unterschiedlicher Arbeitsstellungen im Bereich der Übergabestation und
- Figuren 7 bis 10: teilweise aufgebrochene bzw. teilgeschnittene Draufsichten der Übergabestation in den unterschiedlichen Arbeitsstellungen gemäß den Figuren 3 bis 6.

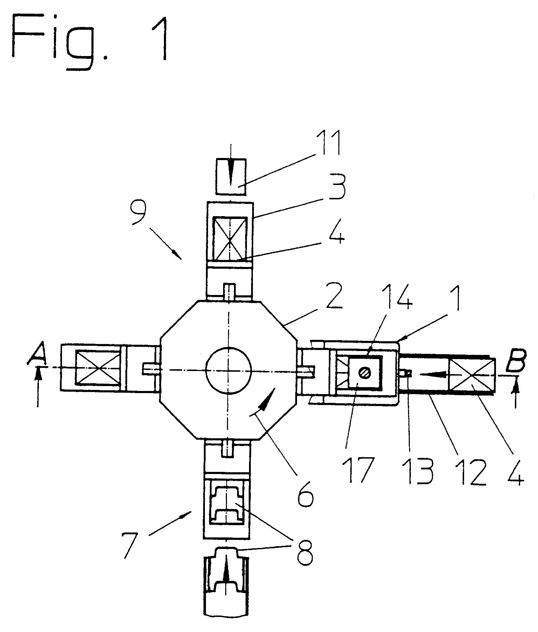

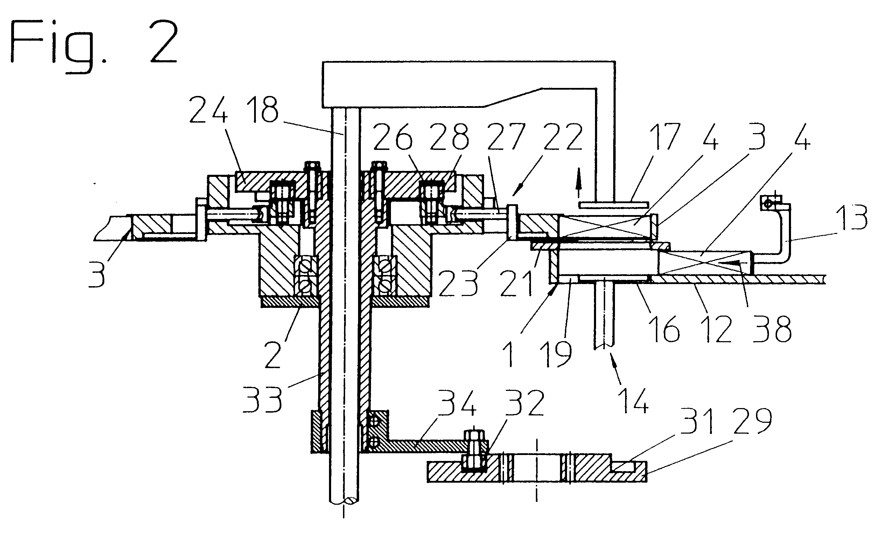

Ein in den Figuren 1 und 2 dargestellter, in einer Übergabeposition mit einer ortsfesten Übergabestation 1 zusammenwirkender Drehteller 2 ist mit vier Aufnahmezellen 3 für Packungsblöcke 4 ausgestattet und taktweise in Pfeilrichtung 6 antreibbar, wobei in einer Arbeitsstellung 7 Kragenzuschnitte 8 in die Aufnahmezellen 3 eingeführt und in einer Arbeitsstellung 9 Couponbeilagen 11 hinzugefügt werden.
Die auf einem unteren Niveau auf einer ortsfesten Zuführungsplattform 12 der Übergabestation 1 mittels eines horizontal vor- und zurückbewegten Schwenkstößels 13 zugeführten Packungsblöcke 4 werden mittels einer Stößeleinrichtung 14 auf ein höheres Niveau in die Aufnahmezellen 3 des Drehtellers überführt.
Die Stößeleinrichtung 14 weist einen unteren Hubstößel 16 und einen Oberstößel 17 auf, dessen Führungsstange 18 längsverschiebbar durch eine zentrale Achsbohrung des Drehtellers 2 hindurchgeführt ist und somit zugleich dessen Drehachse bildet.
Der untere Hubstößel 16 ist durch eine Durchbrechung 19 der Zuführungsplattform 12 hindurchgeführt. In der in Figur 2 dargestellten fluchtenden Stellung der Aufnahmezelle 3 mit der Übergabestation 1 ist zwischen beiden ein stationäres Mundstück 21 vorgesehen.
Im Bereich der Übergabestation 1 wirkt die Stößeleinrichtung 14 bzw. deren Hubstößel 16 wechselweise mit einem Sperrmittel 22 zum Halten der Packungsblöcke 4 in den Aufnahmezellen 3 zusammen. Im Ausführungsbeispiel besteht das Sperrmittel 22 aus einem einer jeden Aufnahmezelle 3 unterseitig zugeordneten, im Drehteller 2 gelagerten Halteschieber 23, der so weit unter die Aufnahmezelle 3 radial im Drehteller 2 vorgeschoben werden kann, daß er einen kleineren Flächenabschnitt des Packungsblocks 4 abstützt, während der Hubstößel 16 den verbleibenden größeren Flächenabschnitt abstützt.

Die Hin- und Herbewegung des Halteschiebers 23 wird durch eine relativ zur Rotation des Drehtellers 2 hin- und herschwenkbare Steuerkurve 24 ausgelöst, in deren Führungsnut 26 eine am Ende einer Schubstange 27 des Halteschiebers 23 gelagerte Steuerrolle 28 eintaucht. Der Antrieb der Steuerkurve 24 erfolgt durch eine Antriebskurve 29, in deren Führungsnut 31 eine Steuerrolle 32 eintaucht, die am Ende eines mit einer Hohlwelle 33 der Steuerkurve 24 verbundenen Antriebshebels 34 gelagert ist.

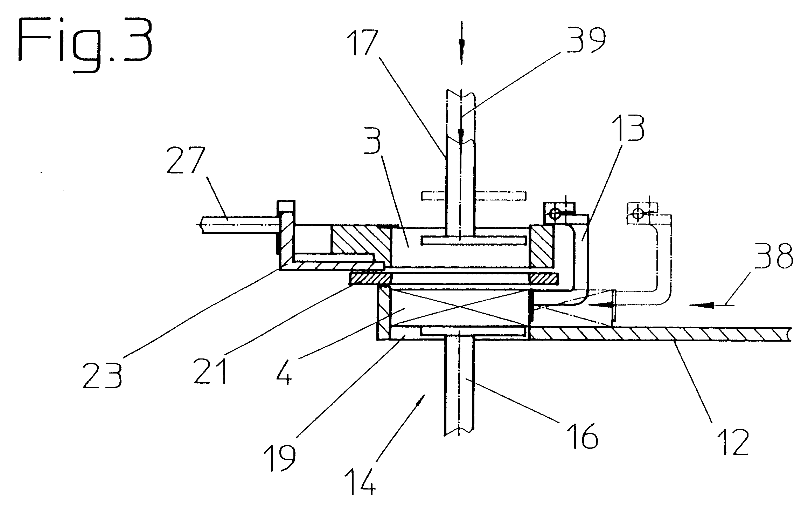

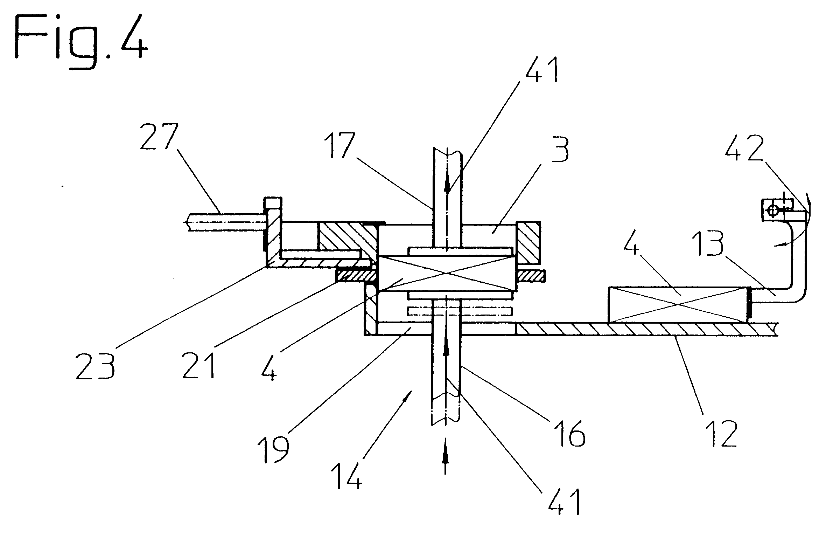

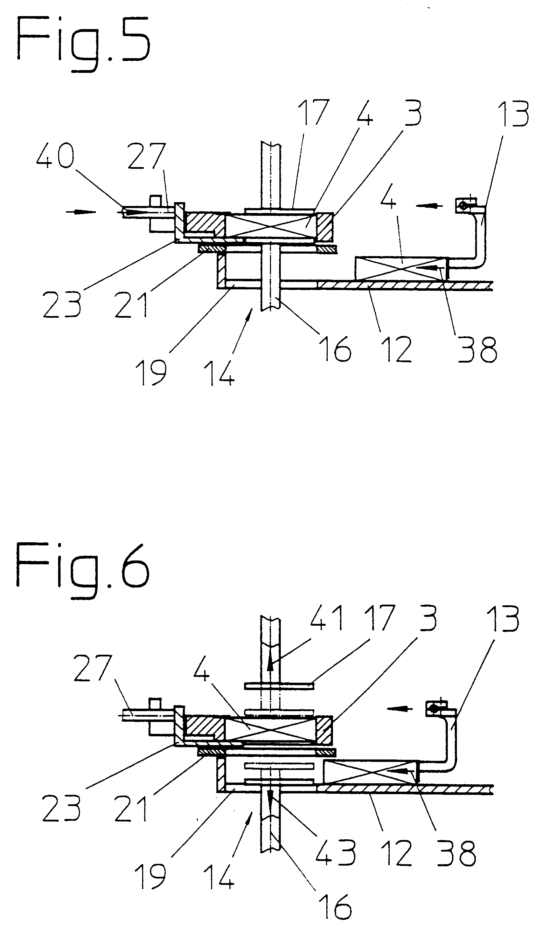

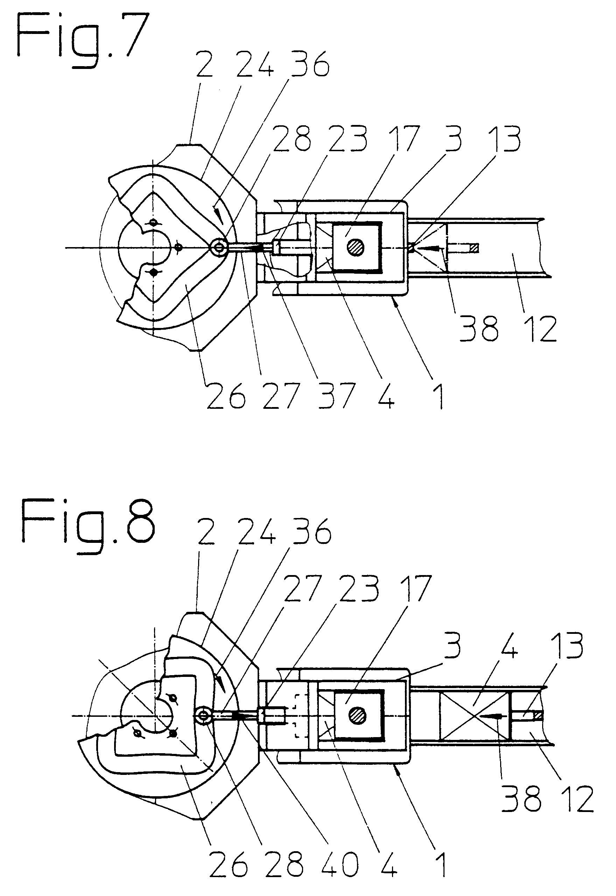

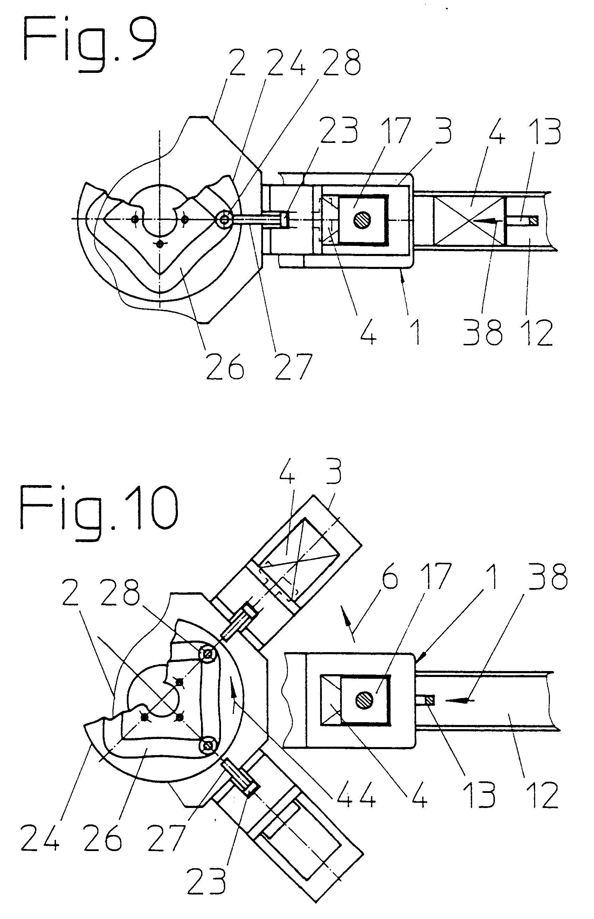

Die Wirkungsweise bei der Überführung eines Packungsblockes 4 von der Übergabestation 1 in eine Aufnahmezelle 3 des Drehtellers 2 wird nachfolgend anhand der Figuren 3 bis 10 erläutert.
Gemäß Figur 3 ist eine leere Aufnahmezelle 3 durch einen Fördertakt des Drehtellers 2 in Richtung des Pfeils 6 gemäß Figur 1 oberhalb der Übergabestation 1 in eine fluchtende Übergabeposition gelangt, wobei durch eine gegenläufige Drehbewegung der Steuerkurve 24 gemäß Pfeil 36 in Figur 7 der Halteschieber 23 aus der in der in Figur 7 gezeigten Stellung in Richtung des Pfeils 37 in die in den Figuren 3, 4 und 8 gezeigte Stellung zurückgezogen wird. Während dieses Bewegungsablaufes ist ein Packungsblock 4 durch den Schwenkstößel 13 gemäß den Figuren 3 bzw. 7 in Richtung des Pfeils 38 in die Übergabestation 1 vorgeschoben und auf dem Hubstößel 16 plaziert worden, wobei der Oberstößel 17 gleichzeitig in Richtung des Pfeils 39 abwärts gegen den Packungsblock 4 bewegt wird.
Anschließend wird der Packungsblock 4 gemäß Figur 4 durch die beiden Stößel 16, 17 gefesselt aufwärts in Richtung der Pfeile 41 in die Aufnahmezelle 3 des Drehtellers 2 überführt, während der bei ausgeschwenkter Stellung (Doppelpfeil 42) über den auf der Führungsplattform 12 nächstfolgenden Packungsblock 4 hinweg zurückgefahrene Schwenkstößel 13 für einen nächsten Vorschub bereitsteht.
Durch die in Richtung des Pfeils 36 gemäß Figur 8 weiterdrehhende Steuerkurve 24 wird der Halteschieber 23, sobald der Packungsblock 4 ganz in die Aufnahmezelle 3 überführt ist, gemäß den Figuren 5 und 9 in Richtung des Pfeils 40 bis unter den Packungsblock 4 vorgeschoben, wobei der Halteschieber 23 im Wechsel mit dem Hubstößel 16 die Abstützung des Packungsblocks 4 in der Aufnahmezelle 3 übernimmt.
Die gemäß Figur 6 in Richtung der Pfeils 41 bzw. 43 zurückfahrenden Stößel 17 bzw. 16 erlauben einen nächsten Fördertakt des Drehtellers 2 mit dem durch den Halteschieber 23 gestützten Packungsblock 4 in Richtung des Pfeils 6 gemäß Figur 1 und ermöglichen zugleich den Vorschub eines nächsten Packungsblocks 4 in die Übergabestation 1 auf den zurückgezogenen Hubstößel 16.
Während dieses Fördertaktes wird durch Rückdrehung der Steuerkurve 24 in Pfeilrichtung 44 gemäß Figur 10 mit der symmetrischen Führungsnut 26 ein nächster Bewegungszyklus des Halteschiebers 23 in Gang gesetzt.
Durch die sich abwechselnden Stützfunktionen des Hubstößels und des Halteschiebers am Packungsblock überlagern sich die Takte bzw. Bewegungen der zusammenwirkenden Komponenten, indem der Drehteller weiterbewegt werden kann, während gleichzeitig die frei gewordene Stößeleinrichtung zur Aufnahme des nächsten Packungsblocks eingesetzt werden kann.

## Patentansprüche

1. Vorrichtung zum Überführen von wenigstens teilweise umhüllten Packungsblöcken (4) aus stabförmigen Artikeln der tabakverarbeitenden Industrie mittels einer Stößeleinrichtung (14) von einem ersten Niveau einer stationären Übergabeposition (1) auf ein zweites Niveau in Aufnahmezellen (3) eines umlaufenden Fördermittels (2), denen im Wechsel mit der Stößeleinrichtung (14) die Packungsblöcke (4) in den Aufnahmezellen (3) haltende Sperrmittel (22) zugeordnet sind, dadurch gekennzeichnet, daß das auf dem zweiten höheren Niveau angeordnete, als um eine vertikale Achse rotierender horizontaler Drehteller (2) ausgebildete Fördermittel unterhalb der Aufnahmezellen (3) mit die Packungsblöcke (4) im Wechsel mit der Stößeleinrichtung (14) stützenden Halteschiebern (23) ausgestattet ist, welche jeweils unter einer Aufnahmezelle (3) im Drehteller (2) verschiebbar sind, wobei die Übergabeposition (1) eine einen Hubstößel (16) der Stößeleinrichtung (14) aufnehmende Durchbrechung (19) einer Zuführungsplattform (12) für die Packungsblöcke (4) umfaßt.

2. Vorrichtung nach Anspruch 1, dadurch gekennzeichnet, daß die Stößeleinrichtung (14) aus die Packungsblöcke (4) gefesselt überführenden Ober- und Unterstößeln (17, 16) besteht.

3. Vorrichtung nach Anspruch 1 oder 2, dadurch gekennzeichnet, daß der Zuführungsplattform (12) ein die Packungsblöcke (4) entlang eines im wesentlichen horizontalen Vorschubweges (Pfeil 38) beaufschlagender Schwenkstößel (13) zugeordnet ist.

4. Vorrichtung nach einem der Ansprüche 1 bis 3, dadurch gekennzeichnet, daß der Hubstößel (16) und der Halteschieber (23) derart ausgebildet bzw. angeordnet und relativ zueinander bewegbar sind, daß sie jeweils benachbarte Flächenabschnitte der Packungsblöcke (4) beaufschlagen.

5. Vorrichtung nach Anspruch 4, dadurch gekennzeichnet, daß der Hubstößel (16) einen größeren Flächenabschnitt und der Halteschieber (23) einen kleineren Flächenabschnitt der Packungsblöcke (4) beaufschlagt.

6. Vorrichtung nach einem der Ansprüche 1 bis 5, dadurch gekennzeichnet, daß zwischen der stationären Übergabeposition (1) und den Aufnahmezellen (3) des Drehtellers (2) ein stationäres Mundstück (21) angeordnet ist.

## Claims

1. A device for transferring at least partially sheathed package blocks (4) of rod-shaped articles of the tobacco-processing industry by means of a push-rod device (14) from a first level of a stationary delivery point (1) to a second level in receiving cells (3) of a revolving conveyor means (2) which, alternating with the push-rod device (14), are associated with blocking means (22) holding the package blocks (4) in the receiving cells (3), characterized in that the conveyor means, which is arranged on the second higher level and is constructed as a horizontal rotary table (2) rotating about a vertical axis, is equipped below the receiving cells (3) with holding slides (23) which, alternating with the push-rod device (14), support the package blocks (4) and which may be displaced in each case below a receiving cell (3) in the rotary table (2), the delivery point (1) including an opening (19), receiving a lilting push-rod (16) of the push-rod device (14), in a supply platform (12) for the package blocks (4).

2. A device according to Claim 1, characterized in that the push-rod device (14) comprises upper and lower push-rods (17, 16) transferring the package blocks (4) in clamped manner.

3. A device according to Claim 1 or 2, characterized in that a pivot push-rod (13) acting on the package blocks (4) along a substantially horizontal feed path (arrow 38) is associated with the supply platform (12).

4. A device according to one of Claims 1 to 3, characterized in that the lilting push-rod (16) and the holding slide (23) are constructed, arranged and movable relative to one another such that they act on respectively adjacent face portions of the package blocks (4).

5. A device according to Claim 4, characterized in that the lifting push-rod (16) acts on a larger face portion of the package blocks (4) and the holding slide (23) acts on a smaller face portion of the package blocks (4).

6. A device according to one of Claims 1 to 5, characterized in that a stationary mouth piece (21) is arranged between the stationary delivery point (1) and the receiving cells (3) of the rotary table (2).

## Revendications

1. Dispositif pour transférer, au moyen d'un système de poussoirs (14), des paquets (4), au moins partiellement enveloppés, d'articles en forme de tige de l'industrie de transformation du tabac, d'un premier niveau, correspondant à un emplacement fixe de remise (1) à un second niveau, dans des alvéoles de réception (3) d'un moyen transporteur rotatif (2), auxquelles sont associés des moyens de blocage (22) maintenant, en alternance avec le système de poussoirs (14), les paquets (4) dans les alvéoles de réception (3), caractérisé en ce que le moyen transporteur, disposé sur le second niveau, plus haut, et réalisé sous forme d'un plateau tournant horizontal (2) entraîné en rotation autour d'un axe vertical, est équipé, au-dessous des alvéoles de réception (3), d'éléments coulissants de retenue (23) qui soutiennent les paquets (4), en alternance avec le système de poussoirs (14), et qui peuvent coulisser chacun sous une alvéole de réception (3) dans le plateau tournant (2), l'emplacement de remise (1) comprenant alors une ouverture (19) d'une plate-forme (12) d'amenée des paquets (4), ouverture qui reçoit un poussoir élévateur (16) du système de poussoirs (14).

2. Dispositif selon la revendication 1, caractérisé en ce que le système de poussoirs (14) se compose de poussoirs supérieur et inférieur (17, 16) qui transfèrent, en les enserrant, les paquets (4).

3. Dispositif selon la revendication 1 ou 2, caractérisé en ce qu'à la plate-forme d'amenée (12), est associé un poussoir pivotant (13) qui agit sur les paquets (4) le long d'un trajet d'avance sensiblement horizontal (flèche 38).

4. Dispositif selon l'une des revendications 1 à 3, caractérisé en ce que le poussoir élévateur (16) et l'élément coulissant de retenue (23) sont conçus ou disposés et sont déplaçables l'un par rapport à l'autre d'une façon telle, qu'ils agissent respectivement sur des secteurs de surface voisins des paquets (4).

5. Dispositif selon la revendication 4, caractérisé en ce que le poussoir élévateur (16) agit sur un secteur de surface relativement grand et l'élément coulissant de retenue (23), sur un secteur de surface plus petit, des paquets (4).

6. Dispositif selon l'une des revendications 1 à 5, caractérisé en ce qu'une pièce d'embouchure fixe (21) est disposée entre l'emplacement fixe de remise (1) et les alvéoles de réception (3) du plateau tournant (2).
